# FASCICULE DE BREVET EUROPEEN

(11) **EP 2 917 563 B1**
(45) Date de publication et mention de la délivrance du brevet: **04.01.2017**
(21) Numéro de dépôt: 13789234.5
(22) Date de dépôt: 04.11.2013
(51) Int. Cl.: F03B 13/00, F03B 17/06, B63J 3/02, H02J 7/14

(54) **HYDROGENERATEUR A EXCITATION**
HYDROGENERATOR MIT ERREGUNG
HYDROGENERATOR WITH EXCITATION

(30) Priorité: 02.11.2012 FR 1260463; 08.11.2012 FR 1260591
(43) Date de publication de la demande: 16.09.2015
(73) Titulaire: Safran Electronics & Defense, 92100 Boulogne-Billancourt (FR)
(72) Inventeur: NOLLET, Michel, F-92100 Boulogne Billancourt (FR)
(74) Mandataire: Lavialle, Bruno François Stéphane
(86) Numéro de dépôt international: PCT/EP2013/072883
(87) Numéro de publication internationale: WO 2014/068096

(56) Documents cités:
- GB-A- 2 372 783
- GB-A- 2 486 334
- US-A- 3 619 632
- US-A1- 2011 049 882

## Description

La présente invention concerne un ensemble embarqué de production et de stockage d'énergie électrique utilisable notamment sur un voilier pour produire de l'énergie électrique afin d'alimenter par exemple les équipements électroniques de bord (voir par exemple le document US 3619632 A).

Un tel ensemble comprend généralement un hydrogénérateur ayant une ligne de sortie reliée à des accumulateurs électriques ayant des paramètres électriques de charge prédéterminés. L'hydrogénérateur comprend une structure porteuse sur laquelle sont montées une génératrice à aimants permanents et une hélice solidaire d'un arbre d'entraînement d'un rotor de la génératrice de telle manière que la structure porteuse puisse être fixée à l'arrière d'un voilier en maintenant l'hélice immergée. La sortie de la génératrice est reliée à un circuit redresseur connecté à un convertisseur continu/continu raccordé aux accumulateurs de telle manière que l'hydrogénérateur alimente les accumulateurs sous une tension continue sensiblement constante.

On comprend que, lorsque le voilier est en mouvement, l'hélice tourne sous l'effet de son déplacement dans l'eau et entraîne en rotation le rotor de la génératrice qui produit alors un courant de charge des accumulateurs.

Au fur et à mesure que la vitesse de rotation de l'hélice augmente, la génératrice fournit de plus en plus de puissance électrique mais, en contrepartie, engendre un couple résistant de plus en plus grand sur l'arbre d'entraînement du rotor. Ainsi, le couple résistant engendré sur l'arbre de l'hélice par la génératrice freine la rotation de l'hélice et empêche l'hélice d'atteindre la vitesse de rotation qu'elle aurait si elle pivotait librement dans le sillage du voilier. Il en résulte une trainée préjudiciable aux performances du voilier, en particulier pour les voiliers de compétition, et plus particulièrement de course au large, pour lesquels la vitesse maximale est une caractéristique essentielle.

Pour obvier à cet inconvénient, il est connu d'utiliser une hélice à pas variable. Dans ce type d'hélice, les pales sont montées sur des axes radiaux pivotants permettant de modifier le pas de l'hélice. Ainsi, avec ce type d'hélice, on augmente le pas de l'hélice pour réduire la trainée qu'elle occasionne au fur et à mesure que la vitesse du bateau augmente. Si cette solution est séduisante sur son principe, elle est cependant complexe à mettre en oeuvre. La commande d'orientation des pales de l'hélice fait appel à un actionneur électromécanique ou à des moyens hydrauliques pilotés par un calculateur de sorte que cette solution se révèle finalement lourde et complexe. En outre, malgré cette complexité, le résultat recherché n'est que partiellement atteint car les moyens mis en oeuvre entrainent un temps élevé de correction de pas. Il en résulte une variation importante de la tension de sortie de la génératrice, qui rend indispensable le convertisseur continu/continu précité et fait que la tension de sortie pourra atteindre des valeurs élevées. Il est connu pour atténuer partiellement ce dernier inconvénient, de prévoir un écrêteur électronique. Un tel écrêteur complexifie cependant encore le système et, lorsqu'il agit, consomme en pure perte un courant élevé sous sa tension d'écrêtage. Il en résulte une perte d'énergie et une augmentation inutile du couple résistant appliqué à l'hélice, et donc de la trainée (résistance à l'avancement) qu'elle produit. En outre, de par le principe même d'une génératrice non régulée, dont on ne peut trop abaisser la tension sous peine d'avoir un courant trop important, et donc des câbles de transport de forte section et lourds, et du convertisseur DC/DC le plus aisé à réaliser qui est abaisseur, sa tension de sortie est particulièrement élevée et considérée comme dangereuse pour un utilisateur en milieu humide.

Un but de l'invention est de proposer un moyen simple pour limiter les inconvénients des systèmes à hydrogénérateur.

A cet effet, on prévoit, selon l'invention, un ensemble embarqué de production et de stockage d'électricité, comprenant au moins un hydrogénérateur ayant une ligne de sortie reliée à au moins un accumulateur électrique ayant des paramètres électriques de charge prédéterminés. L'hydrogénérateur comprend une structure porteuse sur laquelle sont montées une génératrice et une hélice solidaire d'un arbre d'entraînement d'un rotor de la génératrice. La génératrice est une génératrice à excitation et l'hydrogénérateur comprend un circuit redresseur, reliant la génératrice à la ligne de sortie, et au moins un circuit d'excitation de la génératrice. Le circuit d'excitation est relié à un régulateur de courant d'excitation piloté par une unité de commande agencée pour que la génératrice fournisse un courant de charge conforme aux paramètres électriques de charge en fonction d'un couple résistant de la génératrice prédéterminé pour limiter une trainée de l'hélice.

Avec un courant d'excitation constant, on aurait le même inconvénient qu'avec l'induction constante d'une génératrice à aimants permanents, c'est-à-dire que le couple résistant engendré par la génératrice sur l'arbre d'entraînement augmenterait au fur et à mesure qu'augmenterait la vitesse de rotation de l'hélice. Dans l'invention, le courant d'excitation de la génératrice est réglé pour, à la fois, assurer une charge de la batterie tout en conservant la trainée dans des limites acceptables par rapport à la vitesse du navire embarquant le système de l'invention. Cet avantage est obtenu sans recourir à une hélice à pas variable commandée par un système complexe.

Selon des caractéristiques particulièrement avantageuses de l'invention, l'accumulateur est de type Li-Ion et accepte, sous une tension de charge maximale prédéterminée, un courant de charge d'intensité de charge maximale prédéterminée, l'unité de commande pilotant le régulateur de courant de manière à maintenir une tension la plus proche possible de la tension de charge maximale prédéterminée en réglant le courant de charge en fonction du couple résistant prédéterminé.

Les accumulateurs Li-Ion présentent des performances de stockage particulièrement intéressantes par rapport à leur poids de sorte qu'ils sont bien adaptés à une utilisation sur des bateaux tels que des voiliers de compétition. Toutefois, ces accumulateurs sont extrêmement sensibles aux conditions de charge qui, si elles ne sont pas adaptées à ce type d'accumulateurs, provoquent leur échauffement voire leur emballement thermique (ou « thermal runaway »). Le circuit d'excitation est lui agencé pour amener en fin de charge la tension en sortie de génératrice au voisinage de la tension maximale de charge pour assurer une charge optimale sans risquer une détérioration de l'accumulateur. La détermination du couple résistant engendré par la génératrice découle du réglage de l'intensité en sortie de la génératrice, l'accumulateur Li-Ion acceptant une plage importante d'intensité de charge.

De préférence, l'ensemble comporte des moyens de détection d'une rotation de l'hélice et l'unité de commande est reliée aux moyens de détection pour amener le circuit d'excitation dans un mode de fonctionnement nominal lorsqu'une rotation de l'hélice est détectée par les moyens de détection, et, avantageusement, l'unité de commande est agencée pour amener le circuit d'excitation dans le mode de fonctionnement nominal lorsque l'hélice a une vitesse de rotation supérieure à un seuil.

Le fonctionnement de la génératrice à excitation étant tributaire de la fourniture d'un courant d'excitation, alimenter le circuit d'excitation lorsque l'hélice est immobile ou ne tourne pas à une vitesse suffisante engendre une consommation électrique superflue. L'invention permet d'éviter une telle surconsommation.

D'autres caractéristiques et avantages de l'invention ressortiront à la lecture de la description qui suit de modes de réalisation particuliers non limitatifs de l'invention.

Il sera fait référence aux figures annexées, parmi lesquelles :
- la figure 1 est une vue schématique d'un ensemble, conforme à l'invention, de production et de stockage d'électricité ;
- la figure 2a est un diagramme représentant, en fonction du temps, la tension U et l'intensité I du courant sur la ligne de sortie de la génératrice ;
- la figure 2b est un diagramme représentant le couple résistant C produit par la génératrice en fonction de la vitesse de rotation S de l'arbre d'entraînement du rotor ;
- la figure 3 est une représentation schématique d'un mode de réalisation particulier de l'unité de pilotage.

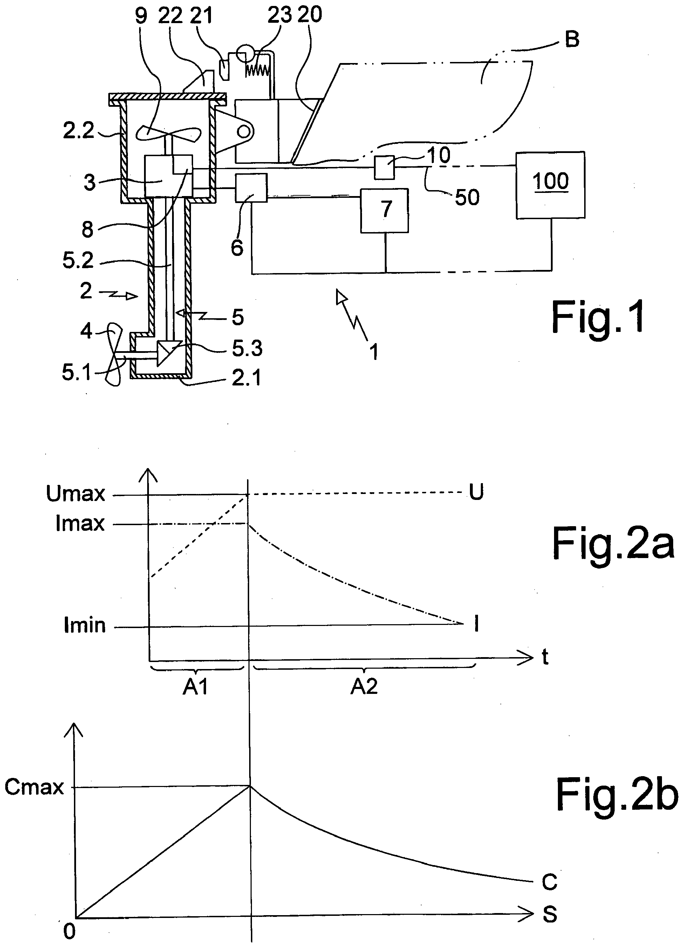

En référence à la figure 1, l'ensemble de production et de stockage d'électricité selon l'invention est embarqué sur un bateau B et plus précisément un voilier.

L'ensemble embarqué de production et de stockage d'électricité, comprend au moins un hydrogénérateur, généralement désigné en 1, ayant une ligne de sortie 50 reliée à des batteries d'accumulateurs électriques 100.

Les accumulateurs électriques 100 sont de type Li-Ion et ont des paramètres électriques de charge prédéterminés. Plus précisément, les accumulateurs 100 acceptant, sous une tension de charge maximale Umax de 28,6 V, un courant de charge d'intensité maximale Imax inférieure ou égale à 300 A.

L'hydrogénérateur 1 comprend une structure porteuse 2 sur laquelle sont montées une génératrice 3 et une hélice 4, à pas fixe, solidaire d'un arbre d'une ligne d'arbres 5.1, 5.2 d'entraînement en rotation d'un rotor de la génératrice 3.

Un circuit redresseur 8 relie la génératrice 3 à la ligne de sortie 50. Le circuit redresseur 8 est ici réalisé directement sur la génératrice 3. Comme l'hydrogénérateur 1 comporte un ventilateur 9 entraîné par l'arbre 5 pour engendrer un flux d'air sur la génératrice 3 de manière à refroidir celle-ci, le circuit redresseur 8 est positionné sur la génératrice 3 de manière à être soumis audit flux d'air. En variante, l'hydrogénérateur peut comprendre un ventilateur auxiliaire entraîné par l'arbre 5 et positionné pour refroidir spécifiquement le circuit redresseur en particulier lorsque celui-ci est dans une position dans laquelle il est masqué du flux d'air engendré par le ventilateur 9.

Dans le mode de réalisation ici décrit, la structure porteuse 2 comprend un pylône ayant une première extrémité 2.1 immergeable et une deuxième extrémité 2.2 qui est agencée pour rester émergée et est équipée de moyens de fixation de la structure porteuse 2 au bateau B. L'hélice 4 est montée sur la première extrémité 2.1 de la structure porteuse 2 et la génératrice 3 est montée sur la deuxième extrémité 2.2 de la structure porteuse 2. De ce fait, la génératrice 3 se trouve toujours hors de l'eau et ne vient pas augmenter la trainée du bateau B. Il est possible d'utiliser une génératrice 3 de forte puissance, et donc relativement volumineuse, sans pénaliser la glisse du bateau B.

La structure porteuse 2 comporte un capotage étanche dans lequel sont reçues la majeure partie de la ligne d'entraînement de la génératrice 3 et la génératrice 3 elle-même. Dans l'agencement décrit ci-dessus, la ligne d'entraînement comprend un premier arbre d'entraînement 5.1 monté pour pivoter dans la première extrémité 2.1 de la structure porteuse 2 et un deuxième arbre d'entraînement 5.2 qui est monté pour pivoter dans le pylône et s'étend de la première extrémité 2.1 à la deuxième extrémité 2.2 de la structure porteuse 2. Le premier arbre 5.1 a une extrémité qui s'étend en saillie à l'extérieur du capotage et porte l'hélice 4 et une extrémité qui s'étend à l'intérieur du capotage et qui est reliée à un renvoi d'angle 5.3. Le capotage est pourvu de moyens d'étanchéité coopérant avec le premier arbre 5.1 pour éviter l'introduction d'eau dans le capotage. Le deuxième arbre 5.2 d'entraînement a une extrémité inférieure reliée au renvoi d'angle 5.3 et une extrémité supérieure accouplée au rotor de la génératrice 3. On a ajouté un joint d'étanchéité en bas de l'arbre 5.2, l'idée étant que si le joint d'étanchéité qui est derrière l'hélice laisse passer un peu d'eau, cette eau ne pourra jamais aller sur la génératrice même lorsque l'hydrogénérateur est mis en position relevée. De même, si de l'eau rentre dans la partie supérieure, elle ne pourra pas entrer dans le compartiment des engrenages. La génératrice 3 est donc ici positionnée selon un axe sensiblement vertical. Le renvoi d'angle a ici un rapport de transmission de 1 mais peut avoir un rapport de transmission supérieur ou inférieur à 1 en fonction des caractéristiques de la génératrice 3 et de l'hélice 4. En particulier, il peut être avantageux de faire tourner l'hélice 4 moins vite que le rotor de la génératrice 3 afin notamment d'éviter la survenance d'un phénomène de cavitation autour de l'hélice 4.

Les moyens de fixation comportent une embase 20 pourvue d'une articulation directionnelle d'axe sensiblement vertical pour permettre un alignement automatique de l'hélice 4 avec la direction d'avancement du bateau B et une articulation de relevage, d'axe sensiblement horizontal, permettant à l'utilisateur d'alternativement émerger et immerger la première extrémité 2.1 de la structure porteuse 2 selon ses besoins.

Les moyens de fixation comprennent en outre un cliquet 21 solidaire de l'embase 20 pour coopérer avec un redan 22 solidaire du capotage de la structure porteuse de manière à maintenir la structure porteuse 2 dans sa position d'immersion de la première extrémité 2.1 en s'opposant à l'effort de relevage exercé sur ladite extrémité par l'eau du fait du déplacement du bateau B. Le cliquet 21 reprend ainsi les efforts dus à la trainée de l'extrémité 2.1 et de l'hélice 4 dans l'eau. Le cliquet 21 est ici pivotant entre une position basse de blocage de la structure porteuse 2 en position d'immersion et une position haute de libération du redan 22 permettant le relevage de la structure porteuse 2. Le cliquet 21 est maintenu dans sa position de blocage par un organe élastique 23 tel qu'un ressort hélicoïdal ou un empilement de rondelles élastiques de type Belleville de telle manière qu'en cas de choc de l'extrémité 2.1 contre un objet flottant, comme un mammifère marin ou un bourguignon (plus connu sous le mot anglais « growler »), l'appui du redan 22 contre le cliquet 21 force le cliquet 21 dans une position de libération forcée à l'encontre de l'effort exercé par l'organe élastique 23.

La génératrice 3 est un alternateur à excitation, de type connu en lui-même, qui a au moins un enroulement relié à un circuit d'excitation de la génératrice. Le circuit d'excitation comporte un régulateur, symbolisé en 6, de courant d'excitation relié aux accumulateurs 100 et piloté par une unité de commande 7 agencée pour que la génératrice 3 fournisse un courant de charge conforme aux paramètres électriques de charge en fonction d'un couple résistant C de la génératrice 3 prédéterminé pour limiter une trainée de l'hélice 4. L'unité de commande 7 est ici plus précisément agencée pour obtenir sur la ligne de sortie 50 une tension U (représentée en trait pointillé sur la figure 2a) la plus proche possible de la tension de charge maximale Umax prédéterminée et pour régler l'intensité I du courant de charge (représenté en trait mixte sur la figure 2a) en fonction du couple résistant C prédéterminé (représenté en trait continu sur la figure 2b).

On comprend que, lorsque l'hélice 4 est immergée, l'unité de commande 7 pilote le régulateur de courant 6 pour que le circuit d'excitation en mode de fonctionnement nominal soit soumis à un courant d'excitation ayant une intensité variant entre une valeur minimum et une valeur maximum. La valeur maximum correspond à une faible vitesse S de rotation de l'hélice 4, lorsque la tension U engendrée sur la ligne de sortie 50 est inférieure à Umax et qu'on cherche alors à produire un courant ayant la plus grande intensité possible (zone A1 de la figure 2a). La valeur minimum correspond à une forte vitesse S de rotation de l'hélice 4, lorsque la tension sur la ligne de sortie 50 est égale à Umax et qu'on cherche alors à produire un courant ayant une intensité plus faible (jusqu'à Imin) mais suffisante pour atteindre la puissance de charge maximale (zone A2 de la figure 2a). Le couple résistant C engendré par la génératrice 3 sur l'arbre d'entraînement 5 en fonction de la vitesse S de rotation de l'hélice 4 croît dans la zone A1 jusqu'à atteindre sa valeur maximale acceptable Cmax puis décroît dans la zone A2 (voir la figure 2b). Ainsi, l'unité de commande 7 est agencée pour que la génératrice 3 fournisse un courant de charge conforme aux paramètres électriques de charge en fonction du couple résistant de la génératrice 3 prédéterminé pour limiter une trainée de l'hélice 4.

L'architecture décrite ci-dessus est suffisante pour assurer la charge des batteries 100. Toutefois, il est nécessaire de toujours alimenter le circuit d'excitation 6 avec un courant d'intensité au moins égale à Imin y compris lorsque l'hélice 4 immergée est immobile ou tourne à une vitesse insuffisante pour entraîner le rotor de la génératrice 3 à la vitesse minimale nécessaire pour respecter les paramètres électriques de charge prédéterminés. Or, il en résulte une consommation électrique superflue lorsque l'hélice 4 immergée est immobile ou tourne à une vitesse insuffisante.

Afin d'éviter cette consommation superflue, il est avantageusement prévu de détecter la vitesse de l'hélice 4 et de n'activer la production de courant de charge que lorsque la vitesse de rotation de l'hélice 4 est suffisante.

La mesure de vitesse est ici basée sur la détection de la tension sur la ligne de sortie, la valeur de cette tension étant liée à la vitesse S de rotation du rotor et donc de l'hélice 4. On sait que le magnétisme rémanent des fers du rotor engendre une tension en sortie de la génératrice 3 lorsque le rotor est entraîné en rotation et ce même si le circuit d'excitation n'est pas alimenté. Ceci est suffisant pour détecter la mise en rotation de l'hélice au moyen d'un détecteur de tension 10 relié à l'unité de commande 7. Lorsqu'une tension est détectée sur la ligne de sortie 50, l'unité de commande 7 pilote le régulateur de courant 6 pour alimenter le circuit d'excitation dans son mode de fonctionnement nominal.

Cependant, l'auto-excitation de la génératrice 3 est aléatoire du fait que le magnétisme rémanent dans les fers du rotor n'est pas constant. Il est donc prévu un mode de veille du circuit d'excitation dans lequel le circuit d'excitation est alimenté via le régulateur de courant 6 par un courant d'intensité réduite (par exemple entre 5 et 10 mA) de manière que la rotation de l'hélice 4 à une vitesse de rotation prédéterminée, suffisante pour que la génératrice commence à engendrer un courant conforme aux paramètres de charge, engendre une tension elle-même prédéterminée (par exemple 0,5 Volt à 1000 tour/min). Ainsi, une mise en rotation de l'hélice engendre en sortie de la génératrice 3 une élévation de tension détectable par l'organe de détection 10. Le détecteur de tension 10 relié à l'unité de commande 7 est plus particulièrement relié à un comparateur de tension agencé dans l'unité de commande 7 pour comparer la tension de la ligne de sortie à une tension de référence (par exemple 0,5 Volt) et émettre un signal lorsque la tension de la ligne de sortie est supérieure à la tension de référence. A l'émission de ce signal, l'unité de commande 7 pilote le régulateur de courant 6 pour amener le circuit d'excitation dans son mode de fonctionnement nominal. La génératrice 3 fournit alors un courant de charge adéquat aux batteries d'accumulateurs électriques 100.

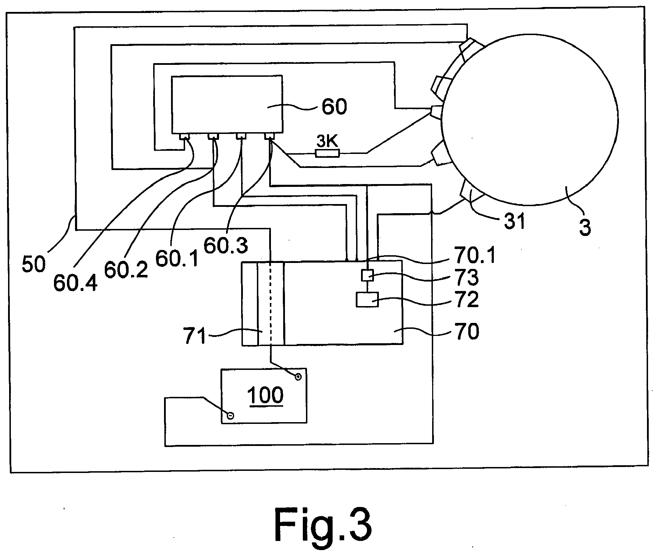

Dans un mode de réalisation particulier, représenté à la figure 3, on utilise pour réguler le courant d'excitation un régulateur de tension 60, par exemple de type PWM, agencé de manière classique pour charger des accumulateurs en surveillant leur tension. Le régulateur de tension 60 régule le courant d'excitation en fonction de la tension des accumulateurs 100 de manière à limiter la charge des accumulateurs 100 pour éviter un emballement thermique. Le régulateur de tension 60 comprend une entrée 60.1 pour recevoir le signal de tension des accumulateurs 100, une entrée 60.2 reliée à la ligne d'alimentation 50, un port 60.3 relié à la masse et une sortie 60.4 reliée au circuit d'excitation. Lorsque le signal de tension en entrée 60.1 correspond à Umax, le régulateur de tension 60 diminue ou coupe l'excitation de la génératrice 3.

Un régulateur de tension 70 est relié à un détecteur à effet Hall 71 monté sur la ligne de sortie 50 pour fournir au régulateur de tension 70 un signal de tension proportionnel au courant circulant dans la ligne de sortie 50. Ce signal de tension est traité (par exemple pour en éliminer l'erreur d'offset du capteur à effet Hall 71 et amplifier le signal de tension) avant d'être exploité par le régulateur de tension 70. La sortie 70.1 du régulateur de tension 70 est reliée à l'entrée 60.1. A l'intérieur du régulateur de tension 70, se trouve une cellule OU 72 à diodes recevant en entrée d'une part le signal de tension proportionnel au courant et d'autre part le signal de tension des accumulateurs 100. La sortie de la cellule OU 72 est reliée à la sortie 70.1.Le OU à diodes peut être réalisé au moyen de diodes de signal ou de diodes Schottky à faible tension de déchet. Si l'on veut réduire encore la tension de déchet, on peut réaliser la fonction « ou à diodes » au moyen, non pas de diodes, mais de transistors (MOSFET par exemple) commandés de façon à ce qu'ils réalisent la fonction « ou à diodes », ou de circuits intégrés réalisant cette fonction.

Ainsi, le signal de tension qui sert pour la régulation effectuée par le régulateur de tension 60 est le plus fort des deux signaux reçus en entrée, à savoir le signal de tension proportionnel au courant et le signal de tension des accumulateurs 100. Il est de la sorte possible de forcer le régulateur de tension 60 à limiter ou à couper l'excitation de la génératrice 3 quand bien même la tension des accumulateurs 100 n'aurait pas atteint Umax.

L'accouplement de ces deux régulateurs permet ainsi d'assurer une régulation en tension et une régulation en courant.

La prise en compte de la vitesse de rotation de l'hélice et l'alimentation du circuit d'excitation lorsqu'une vitesse prédéterminée est atteinte est obtenue en utilisant une sortie libre 31 de l'alternateur 3 comportant ses propres diodes de redressement, de sorte que la tension qui s'y trouve dépend de la vitesse de rotation du rotor de la génératrice 3 alors que la tension sur la sortie principale 50 est celle de la batterie, et en comparant la tension (qui y apparaît quand l'hélice tourne) à une tension de référence (par exemple 0,5 Volt) pour piloter un interrupteur 73 monté entre la sortie de la cellule OU 72 et la sortie 70.1, l'interrupteur 73 étant passant lorsque la tension de la ligne de sortie est supérieure à la tension de référence.

Différents modes de fixation de l'hélice sur l'arbre d'entraînement sont envisageables. Il est de préférence prévu qu'un blocage de l'hélice ne conduise pas à la rupture de l'hélice ou de la ligne d'arbres. Afin d'éviter une détérioration de l'hélice 4 et/ou de la ligne d'arbres de transmission 5 et/ou de la génératrice 3 lorsque l'hélice 4 est bloquée en rotation par un obstacle tel qu'un objet dur ou un filet ou un cordage, il est ici prévu que l'hélice soit vissée sur l'arbre d'entraînement avec un pas de vissage orienté de telle manière que l'hélice 4 entraînée en rotation par le flux tende à se resserrer. Au moment où l'obstacle va bloquer l'hélice 4 en rotation, le rotor de la génératrice va devenir moteur un court instant sous l'effet de son inertie, ce qui va inverser le couple transmis et va simplement provoquer un dévissage de l'arbre par rapport à l'hélice 4 bloquée en rotation. Normalement, l'hélice ne se trouve pas totalement dévissée du fait de ce desserrage. Néanmoins, il est de préférence prévu une butée axiale empêchant que l'hélice totalement dévissée ne quitte l'arbre et ne soit perdue, sans toutefois empêcher une rotation de l'arbre d'entraînement par rapport à l'hélice. Cette caractéristique est particulièrement intéressante en combinaison avec la génératrice de l'invention mais est aussi applicable à d'autres types de génératrice.

Bien entendu, l'invention n'est pas limitée aux modes de réalisation décrits mais englobe toute variante entrant dans le champ de l'invention telle que définie par les revendications.

En particulier, l'hydrogénérateur peut avoir une structure différente de celle décrite.

Avantageusement, l'hélice peut être orientée vers l'avant du pylône de sorte que l'hélice ne soit pas masquée par le pylône ou par la génératrice lorsque celle-ci est montée sur la portion d'extrémité immergée du pylône. Ceci est particulièrement intéressant dans ce dernier cas, en particulier lorsque la génératrice est de fort encombrement, car la génératrice restreint de manière importante le flux auquel l'hélice est soumise. Le rendement de l'hélice est amélioré et le régime de l'hélice est plus constant. Cette caractéristique est particulièrement intéressante en combinaison avec un montage de l'hélice vers l'avant et avec la génératrice de l'invention mais est aussi applicable à un montage vers l'arrière et / ou d'autres types de génératrice.

La mesure de vitesse de l'hélice peut être obtenue par une mesure de la valeur ou de la fréquence de la tension produite par l'alternateur ou par un capteur dédié monté sur l'arbre d'entraînement du rotor.

Le démarrage lorsque l'hélice tourne peut se faire par auto-excitation de l'alternateur au lieu de l'excitation d'origine externe qui a été choisie ici.

L'hydrogénérateur peut comprendre un détecteur d'immersion de l'hélice permettant d'alimenter l'ensemble de production d'électricité (unité de commande et régulateur de courant notamment) uniquement lorsque l'hélice est immergée. Ce capteur peut prendre la forme d'un interrupteur disposé sur l'extrémité émergée de la structure porteuse 2 pour coopérer avec une partie solidaire du bateau lorsque la première extrémité de la structure porteuse 2 est amenée de sa position émergée à sa position immergée.

L'ensemble de l'invention peut comprendre deux ou N hydrogénérateurs reliés à l'accumulateur et susceptibles de fonctionner simultanément. L'asservissement décrit ci dessus, qui contrôle le courant d'excitation de façon à réduire la trainée de chaque hélice et de façon à ce que la tension maximale acceptable par la batterie ne soit jamais dépassée, assurera dans ce cas à la fois un courant de charge doublé (ou multiplié par N) tant que la tension maximale de la batterie n'est pas atteinte, mais également le respect de la tension limite par réduction des excitations des deux ou des N génératrices. Dans ce dernier cas, les génératrices fourniront toutes deux (ou toutes les N) une partie du courant de charge de façon à ce que la somme des courants de charge atteigne tout juste la valeur de courant qui produit aux bornes de la batterie la tension de charge souhaitée.

La génératrice peut être montée sur l'extrémité immergeable de la structure porteuse si sa section n'est pas une gêne (autrement dit si elle n'augmente pas excessivement la trainée).

La génératrice peut comprendre un ou plusieurs enroulements.

L'hydrogénérateur peut comprendre un ou plusieurs voyants montrant son bon fonctionnement.

L'ensemble de production et de stockage électriques de l'invention peut comprendre des accumulateurs d'un autre type que les accumulateurs Li-Ion et notamment des accumulateurs au plomb, des accumulateurs Ni-Cd ou bien encore des accumulateurs Ni-MH.

## Revendications

1. Ensemble embarqué de production et de stockage d'électricité, comprenant au moins un hydrogénérateur (1) ayant une ligne de sortie (50) reliée à au moins un accumulateur électrique (100) ayant des paramètres électriques de charge prédéterminés, l'hydrogénérateur comprenant une structure porteuse (2) sur laquelle sont montées une génératrice (3) et une hélice (4) solidaire d'un arbre (5) d'entraînement d'un rotor de la génératrice (3), **caractérisé en ce que** la génératrice (3) est une génératrice à excitation et l'hydrogénérateur (1) comprend un circuit redresseur (8) reliant la génératrice (3) à la ligne de sortie (50), et au moins un circuit d'excitation de la génératrice (3), le circuit d'excitation étant relié à un régulateur (6) de courant d'excitation piloté par une unité de commande (7) agencée pour que la génératrice (3) fournisse un courant de charge conforme aux paramètres électriques de charge en fonction d'un couple résistant de la génératrice (3) prédéterminé pour limiter une trainée de l'hélice (4).

2. Ensemble selon la revendication 1, dans lequel l'accumulateur (100) est de type Li-Ion acceptant, sous une tension de charge maximale prédéterminée, un courant de charge d'intensité de charge maximale prédéterminée, l'unité de commande (7) pilotant le régulateur de courant de manière à maintenir une tension la plus proche possible de la tension de charge maximale prédéterminée et régler le courant de charge en fonction du couple résistant prédéterminé.

3. Ensemble selon la revendication 1, dans lequel le circuit redresseur (8) est réalisé directement sur la génératrice (3).

4. Ensemble selon la revendication 3, comportant un ventilateur (9) entrainé par l'arbre (5) pour engendrer un flux d'air sur la génératrice (3), le circuit redresseur étant positionné pour être soumis audit flux d'air.

5. Ensemble selon la revendication 1, comportant des moyens de détection d'une rotation de l'hélice (4) et l'unité de commande (7) étant reliée aux moyens de détection pour amener le circuit d'excitation dans un mode de fonctionnement nominal lorsqu'une rotation de l'hélice (4)
est détectée par les moyens de détection.

6. Ensemble selon la revendication 5, dans lequel l'unité de commande (7) est agencée pour amener le circuit d'excitation dans le mode de fonctionnement nominal lorsque l'hélice (4) a une vitesse de rotation supérieure à un seuil.

7. Ensemble selon la revendication 5, dans lequel la détection de rotation est obtenue par détection d'une tension sur la ligne de sortie et l'unité de commande (7) est agencée pour maintenir le circuit d'excitation dans un mode de veille lorsque l'hélice (4) est immobile ou à une vitesse de rotation inférieure à un seuil, le circuit d'excitation dans le mode de veille étant alimenté par un courant d'intensité inférieure à l'intensité du courant alimentant le circuit d'excitation en mode de fonctionnement nominal.

8. Ensemble selon la revendication 1, dans lequel l'hélice (4) étant montée à une première extrémité de la structure porteuse (2) qui est agencée pour être immergeable, la génératrice (3) est montée à une deuxième extrémité de la structure porteuse (2) qui est agencée pour rester émergée et est équipée de moyens de fixation de la structure porteuse (2) à un navire, les moyens de fixation comportant une articulation directionnelle d'axe sensiblement vertical.

9. Ensemble selon la revendication 8, dans lequel les moyens de fixation comportent également une articulation de relevage, d'axe sensiblement horizontale, permettant alternativement d'émerger et d'immerger la première extrémité de la structure porteuse (2).

10. Ensemble selon la revendication 8, dans lequel l'hélice (4) peut être orientée vers l'avant d'un pylône.

11. Ensemble selon la revendication 8, dans lequel l'hélice (4) est vissée sur l'arbre d'entraînement (5) avec un pas de vissage orienté de telle manière que l'hélice (4) entraînée en rotation par le flux tende à se resserrer.

12. Ensemble selon la revendication 1, comprenant deux ou N hydrogénérateurs reliés à l'accumulateur (100), dans lequel, si les génératrices fonctionnent simultanément, les circuits d'excitation sont agencés de telle manière que le courant de charge est doublé ou multiplié par N tant que la tension maximum de la batterie n'est pas atteinte, et que les génératrices se répartissent le courant total de charge nécessaire pour maintenir la batterie à sa tension de charge maximum lorsque cette tension est atteinte.

## Patentansprüche

1. Bordeigene Einheit zur Erzeugung und Speicherung von elektrischem Strom, umfassend mindestens einen Hydrogenerator (1), der eine Ausgangsleitung (50) hat, die mit mindestens einem Akkumulator (100) verbunden ist, der vorgegebene elektrische Ladeparameter hat, wobei der Hydrogenerator eine tragende Struktur (2) umfasst, auf der ein Generator (3) und ein fest mit einer Antriebswelle (5) eines Rotors des Generators (3) verbundener Propeller angebracht sind, **dadurch gekennzeichnet, dass** der Generator (3) ein Generator mit Erregung ist und der Hydrogenerator (1) eine Gleichrichterschaltung (8) umfasst, die den Generator (3) mit der Ausgangsleitung (50) verbindet, sowie mindestens einen Erregerkreis für den Generator (3), wobei der Erregerkreis mit einem Regler (6) zum Regeln des Erregerstroms verbunden ist, der von einer Steuereinheit (7) gesteuert wird, die so ausgebildet ist, dass der Generator (3) einen Ladestrom gemäß den elektrischen Ladeparametern in Abhängigkeit von einem Lastmoment des Generators (3) liefert, das vorgegeben ist, um einen Strömungswiderstand des Propellers (4) zu begrenzen.

2. Einheit nach Anspruch 1, wobei der Akkumulator (100) vom Typ Li-Ion ist, der unter einer vorgegebenen maximalen Ladespannung einen Ladestrom mit vorgegebener maximaler Ladeintensität akzeptiert, wobei die Steuereinheit (7) den Stromregler derart steuert, dass eine Spannung, die der vorgegebenen maximalen Ladespannung so nahe wie möglich ist, beibehalten und der Ladestrom in Abhängigkeit des vorgegebenen Lastmoments geregelt wird.

3. Einheit nach Anspruch 1, wobei die Gleichrichterschaltung (8) direkt auf dem Generator (3) realisiert ist.

4. Einheit nach Anspruch 3, umfassend einen Ventilator (9), der von der Welle (5) angetrieben wird, um einen Luftstrom an dem Generator (3) zu erzeugen, wobei die Gleichrichterschaltung so positioniert ist, dass sie dem Luftstrom ausgesetzt ist.

5. Einheit nach Anspruch 1, umfassend Detektionsmittel zum Erfassen einer Drehung des Propellers (4), und wobei die Steuereinheit (7) mit den Detektionsmitteln verbunden ist, um den Erregerkreis in eine Nennbetriebsart zu bringen, wenn eine Drehung des Propellers (4) von den Detektionsmitteln erfasst wird.

6. Einheit nach Anspruch 5, wobei die Steuereinheit (7) so ausgebildet ist, dass sie den Erregerkreis in die Nennbetriebsart bringt, wenn der Propeller (4) eine Drehgeschwindigkeit hat, die größer als ein Schwellwert ist.

7. Einheit nach Anspruch 5, wobei die Erfassung der Drehung durch die Erfassung einer Spannung an der Ausgangleitung erreicht wird und die Steuereinheit (7) so ausgebildet ist, dass sie den Erregerkreis in einem Bereitschaftsmodus hält, wenn der Propeller (4) ruht oder eine Drehgeschwindigkeit hat, die kleiner als ein Schwellwert ist, wobei der Erregerkreis in dem Bereitschaftsmodus von einem Strom mit einer Intensität versorgt wird, die kleiner als die Intensität des Stroms ist, der den Erregerkreis in der Nennbetriebsart versorgt.

8. Einheit nach Anspruch 1, wobei der Propeller (4) an einem ersten Ende der tragenden Struktur (2) angebracht ist, das so ausgebildet ist, dass es untergetaucht werden kann, der Generator (3) an einem zweiten Ende der tragenden Struktur (2) angebracht ist, das so ausgebildet ist, dass es über Wasser bleibt und mit Befestigungsmitteln zum Befestigen der tragenden Struktur (2) an einem Schiff ausgestattet ist, wobei die Befestigungsmittel eine Richtungsgelenkverbindung mit einer im Wesentlichen vertikalen Achse umfassen.

9. Einheit nach Anspruch 8, wobei die Befestigungsmittel ferner eine Hebegelenkverbindung mit einer im Wesentlichen horizontalen Achse umfassen, die abwechselnd ein Auftauchen und Eintauchen des ersten Endes der tragenden Struktur (2) ermöglicht.

10. Einheit nach Anspruch 8, wobei der Propeller (4) von einem Mast nach vorne gerichtet sein kann.

11. Einheit nach Anspruch 8, wobei der Propeller (4) auf die Antriebswelle (5) mit einem Schraubengang geschraubt wird, der so ausgerichtet ist, dass der von dem Strom in Drehung angetriebene Propeller (4) dazu neigt, sich nachzuziehen.

12. Einheit nach Anspruch 1, umfassend zwei oder N Hydrogeneratoren, die mit dem Akkumulator (100) verbunden ist, wobei, wenn die Generatoren gleichzeitig arbeiten, die Erregerkreise derart ausgebildet sind, dass der Ladestrom verdoppelt oder mit N multipliziert wird, solange die maximale Spannung der Batterie nicht erreicht ist, und dass sich die Generatoren den Gesamtladestrom teilen, der erforderlich ist, um die Batterie auf ihrer maximalen Ladespannung zu halten, wenn diese Spannung erreicht ist.

## Claims

1. An on-board assembly for producing and storing electricity, comprising at least one hydrogenerator (1) having an output line (50) connected to at least one electrical accumulator (100) having predetermined electrical charging parameters, the hydrogenerator comprising a carrying structure (2) on which a generator (3) and an impeller (4) secured to a driveshaft (5) of a rotor of the generator (3) are mounted, **characterized in that** the generator (3) is an excitation generator and the hydrogenerator (1) comprises a rectifier circuit (8) connecting the generator (3) to the output line (50), and at least one circuit for excitation of the generator (3), the excitation circuit being connected to an excitation current regulator (6) driven by a control unit (7) arranged so that the generator (3) supplies a charging current corresponding to the electrical charging parameters as a function of a predetermined resisting torque of the generator (3) in order to limit drag of the impeller (4).

2. The assembly as claimed in claim 1, wherein the accumulator (100) is of the Li ion type accepting, under a predetermined maximum charging voltage, a charging current with a predetermined maximum charging strength, the control unit (7) driving the current regulator so as to maintain a voltage as close as possible to the predetermined maximum charging voltage and to regulate the charging current as a function of the predetermined resisting torque.

3. The assembly as claimed in claim 1, wherein the rectifier circuit (8) is produced directly on the generator (3).

4. The assembly as claimed in claim 3, comprising a fan (9) driven by the shaft (5) in order to generate an air flow over the generator (3), the rectifier circuit being positioned in order to be subjected to said air flow.

5. The assembly as claimed in claim 1, comprising means for detecting rotation of the impeller (4), and the control unit (7) being connected to the detection means in order to bring the excitation circuit into a rated operating mode when rotation of the impeller (4) is detected by the detection means.

6. The assembly as claimed in claim 5, wherein the control unit (7) is arranged in order to bring the excitation circuit into the rated operating mode when the impeller (4) has a rotational speed higher than a threshold.

7. The assembly as claimed in claim 5, wherein the rotation detection is obtained by detecting a voltage on the output line, and the control unit (7) is arranged in order to maintain the excitation circuit in a standby mode when the impeller (4) is stationary or has a rotational speed lower than a threshold, the excitation circuit being supplied in the standby mode with a current of strength of less than the strength of the current supplying the excitation circuit in rated operating mode.

8. The assembly as claimed in claim 1, wherein, the impeller (4) being mounted at a first end of the carrying structure (2) which is arranged so as to be submersible, the generator (3) is mounted at a second end of the carrying structure (2) which is arranged in order to remain unsubmerged and is equipped with means for fastening the carrying structure (2) to a vessel, the fastening means comprising a directional articulation with a substantially vertical axis.

9. The assembly as claimed in claim 8, wherein the fastening means also comprise a lifting articulation with a substantially horizontal axis, making it possible alternately to extract and submerge the first end of the carrying structure (2).

10. The assembly as claimed in claim 8, wherein the impeller (4) can be oriented toward the front of a pylon.

11. The assembly as claimed in claim 8, wherein the impeller (4) is screwed onto the driveshaft (5) with a screw pitch oriented in such a way that the impeller (4) tends to be tightened when driven in rotation by the flow.

12. The assembly as claimed in claim 1, comprising two or N hydrogenerators connected to the accumulator (100), wherein, if the generators are operating simultaneously, the excitation circuits are arranged in such a way that the charging current is doubled or multiplied by N as long as the maximum voltage of the battery is not reached, and that the generators distribute the total charging current necessary to maintain the battery at its maximum charging voltage when this voltage is reached.
